# EUROPÄISCHE PATENTANMELDUNG

(11) **EP 1 277 905 A2**
(43) Veröffentlichungstag der Anmeldung: **22.01.2003**
(21) Anmeldenummer: 02013870.7
(22) Anmeldetag: 22.06.2002
(51) Int. Cl.: E05C 17/56, E05D 11/10

(54) **Feststeller zwischen zwei relativ zueinander beweglichen Baugruppen**

(30) Priorität: 19.07.2001 DE 10135253
(71) Anmelder: Stabilus GmbH, D-56070 Koblenz (DE)
(72) Erfinder: Mintgen, Rolf, 56743 Thür (DE); Rennecke, Dirk, 56626 Andernach (DE); Pohl, Dirk, 72070 Tübingen (DE); Kolaric, Ivica, 73728 Esslingen (DE)
(74) Vertreter: Klein, Thomas, Dipl.-Ing. (FH)

(57) **Zusammenfassung**

Feststeller für zwei relativ zueinander bewegliche Objekte, insbesondere Türfeststeller, umfassend einen Zylinder, der in Wirkverbindung mit einem ersten Objekt steht und einen Reibflächenträger, der in Wirkverbindung mit einem zweiten Objekt steht, wobei ein Reibelement durch Energiezufuhr einen Reibschluss zwischen dem Zylinder und dem Reibflächenträger herstellt, wobei das Reibelement mit einer elektrischen Spannungsversorgungseinrichtung verbunden ist, wobei in Abhängigkeit der angelegten Spannung eine Volumenveränderung des Reibelementes auftritt, die eine Stellbewegung des Reibelementes bezogen auf die Reibfläche darstellt.

## Beschreibung

Die Erfindung betrifft einen Feststeller zwischen zwei relativ zueinander beweglichen Objekten entsprechend dem Oberbegriff von Patentanspruch 1.

Aus der DE 15 29 716 A1 ist ein hydropneumatisches Hubaggregat mit einer hydraulischen Sperre bekannt. Das Hubaggregat verfügt über einen Arbeitsraum, in dem ein Arbeitskolben eine Betriebsbewegung ausführen kann. Zwischen dem Arbeitskolben und der Wandung, die den Arbeitsraum begrenzt, ist ein willkürlich ansteuerbares Reibelement angeordnet, dessen Reibkraft durch einen Volumenzuwachs erzeugt wird. Der Volumenzuwachs wird durch Zuführen von hydraulischem Medium in das elastisch aufweitbare, als Hohlkörper ausgeführte Reibelement erreicht.

Die DE 199 10 782 A1 beschreibt ein Türscharnier, der einen Zylinder aufweist, der mit einer elektrorheologischen Flüssigkeit gefüllt ist. Ein als Flügel ausgeformter Kolben unterteilt den Zylinder in mindestens zwei Arbeitsräume. Eine Strömungsverbindung zwischen den Arbeitsräumen unterliegt dem Einfluss eines elektrischen Feldes, so dass durch Änderung der Viskosität der Flüssigkeit innerhalb der Strömungsverbindung eine Blockierwirkung erreicht wird. Die Haltekraft des Türfeststellers kann dadurch gesteigert werden, dass man die Strömungsverbindung möglichst lang dimensioniert. Eine derartige Ausgestaltung begrenzt jedoch den maximalen Schwenkwinkel des Türscharniers, da die Strömungsverbindung von einem Spalt zwischen dem Flügel und der Wandung des Zylinders gebildet wird.

Aufgabe der vorliegenden Erfindung ist es, einen Feststeller zwischen zwei relativ zueinander beweglichen Objekten zu schaffen, der einen sehr einfachen Aufbau aufweist und wenig Bauraum benötigt.

Erfindungsgemäß wird die Aufgabe dadurch gelöst, dass das Reibelement mit einer elektrischen Spannungsversorgungseinrichtung verbunden ist, wobei in Abhängigkeit der angelegten Spannung eine Volumenveränderung des Reibelementes auftritt, die eine Stellbewegung des Reibelementes bezogen auf die Reibfläche darstellt.

Eine besondere Eigenart des Feststellers ist darin zu sehen, dass man ohne Blockierventile o. ä. teilweise aufwändigen Baugruppen auskommt und trotzdem eine stufenlose Arbeitsweise bezogen auf den Betriebsweg des Feststellers nutzen kann.

Neben der Möglichkeit einen Piezo-Aktuator zu verwenden ist vorgesehen, dass das Reibelement von einem Kohlenstoff-Aktuator gebildet wird.

Es gibt wiederum mehrere Möglichkeiten bezüglich des Aufbaus des Kohlenstoff-Aktuators. So kann der Kohlenstoff-Aktuator aus Fullerenen bestehen. Fullerene verfügen über eine polyederförmige Gestalt. Alternativ kann der Kohlenstoff-Aktuator auch in der Form von zusammengefassten Röhrchen ausgeführt sein.

Die Röhrchen wiederum können zu einem gut handhabbaren Flies, ähnlich wie Papier, zusammengefasst sein.

Zur Steigerung der Reibwirkung und zum Schutz kann der Kohlenstoff-Aktuator mit einem Reibbelag beschichtet sein.

Eine besonders einfache elektrische Kontaktierung erreicht man insbesondere dann, wenn der Kohlenstoff-Aktuator zumindest teilweise von einem Elektrolyten eingeschlossen ist.

Als Elektrolyt kann z. B. eine ganz einfache Salzlösung verwendet werden.

Als besonders vorteilhaft hat es sich herausgestellt, wenn der Feststeller als Drehscharnier ausgeführt ist und der Reibflächenträger von einem Scharnierbolzen gebildet wird. Man erreicht ein sehr günstiges Verhältnis von der Größe der Reibfläche zur räumlichen Ausdehnung des Zylinders.

Um einen möglichst kompakten Aufbau zu erreichen, weist der Scharnierbolzen einen Flansch auf, der für das Drehscharnier einen Deckel bildet.

Optional kann der Feststeller mit einer Sensorik bestückt sein, die eine Relativbewegung der beiden zueinander beweglichen Objekte erfasst. Mit der Sensorik kann eine Steuerung des Feststellers vorgenommen werden.

In weiterer vorteilhafter Ausgestaltung weist die Sensorik ein Getriebe mit einem Ein- und mit einem Ausgangsteil auf, wobei eine der beiden Getriebeteile mit dem Reibflächenträger und das andere mit dem Zylinder in Wirkverbindung steht. Mit dem Getriebe kann eine Spreizung der Sensorik erreicht und damit die Genauigkeit gesteigert werden.

Dabei ist der Flansch des Scharnierbolzens als ein Getriebeteil ausgeführt und der Zylinder weist eine exzentrisch zur Mittelachse des Feststellers ausgeführte Lagerstelle für das andere Getriebeteil auf. Anbauten für die Sensorik an den beiden zu einander beweglichen Objekten können entfallen.

Um möglichst auf eine lange Betriebszeit und unter allen Umständen möglichst genau und zuverlässig zu funktionieren, ist das Getriebe der Sensorik als ein Zahnradgetriebe ausgeführt.

Anhand der folgenden Figurenbeschreibung soll die Erfindung näher erläutert werden.

Es zeigt:
- Fig. 1: Feststeller in perspektivischer Darstellung
- Fig. 2: Feststeller im Schnitt
- Fig. 3: Feststeller in der Draufsicht

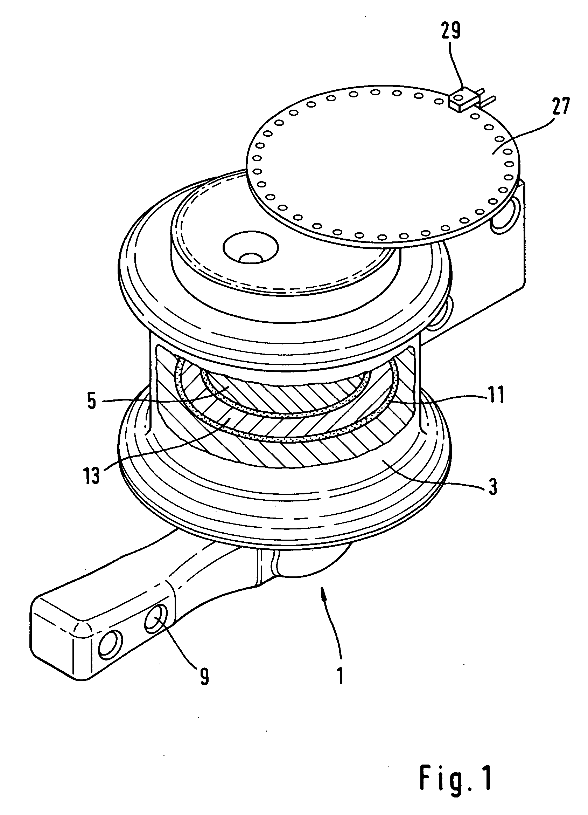

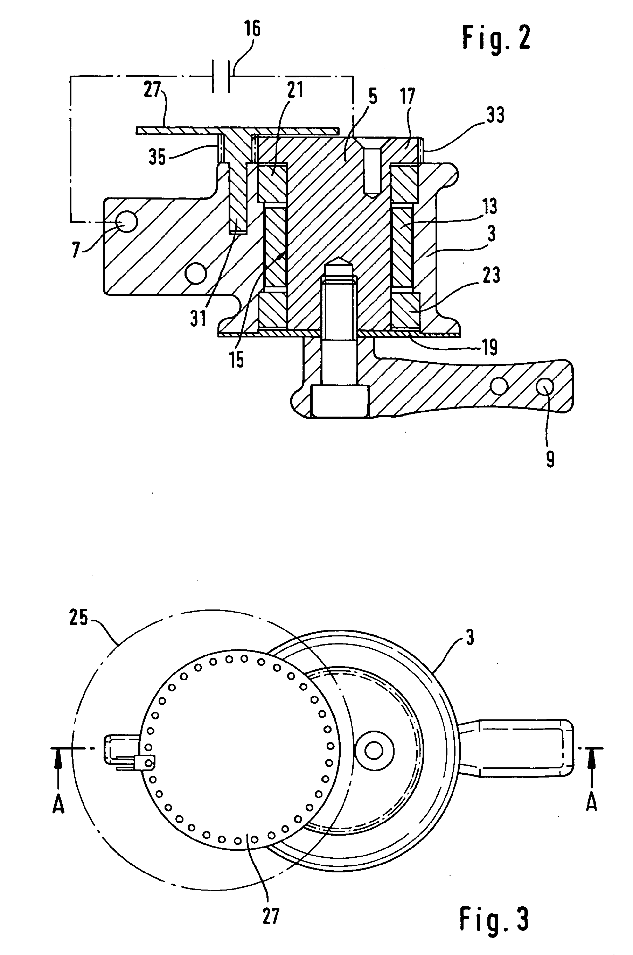

Die Figuren 1 - 3 zeigen einen Feststeller 1, wie er beispielsweise zwischen einer nicht dargestellten Fahrzeugkarosserie und einer Fahrzeugtür verwendet werden könnte, wobei die Fahrzeugtür ein bewegliches Objekt darstellt. Der Feststeller umfasst einen Zylinder 3, in dem ein Reibflächenträger 5 angeordnet ist. Beide Hauptkomponenten sind mit Anschlussorganen 7; 9 versehen zu jeweils einem der genannten Objekte. Der Reibflächenträger 5 und der Zylinder 3 bilden einen Ringraum 11, in dem ein Aktuator 13 mit einer spannungsabhängigen Volumenveränderung angeordnet ist. Konstruktiv ist der Feststeller als ein Drehscharnier ausgeführt, wobei der Reibflächenträger 5 von einem Scharnierbolzen gebildet wird, in dem die Mantelfläche des Scharnierbolzens die Reibfläche 15 darstellt.

Der Aktuator besteht aus einem zumindest kohlenstoffhaltigen Werkstoff, der in seiner Struktur Fullerene oder Röhrchen aufweist, die zu einem Flies zusammengefasst sind. Das Rohmaterial wird unter der Bezeichnung Bucky-Paper oder Bucky-Balls vertrieben. Zur Übertragung der elektrischen Spannung von einer elektrischen Spannungsversorgungseinrichtung 16, beispielsweise der Fahrzeugbatterie, auf den Aktuator ist der Ringraum 11 zumindest teilweise mit einem Elektrolyt, z. B. einer einfachen Kochsalzlösung gefüllt. Ein Flansch 17 des Scharnierbolzens 5 als Deckel und eine Isolierscheibe 19 begrenzen den Ringraum 11, wobei zusätzliche endseitige Dichtungen 21; 23 einem Verlust des Elektrolyts entgegenwirken.

Sobald über nicht dargestellte elektrische Anschlüsse am Feststeller zum Kohlenstoff-Aktuator eine elektrische Spannung gelegt wird, dehnt sich dieser räumlich aus und stellt einen Kontakt zur Innenwandung des Zylinders und der Reibfläche 15 her. Dabei wird über den Kohlenstoff-Aktuator als Reibelement selbst ein Reibschluss zwischen der Innenwandung und dem Scharnierbolzen hergestellt, die einer Haltekraft zwischen der besagten Fahrzeugtür und der Fahrzeugkarosserie entspricht. Zur Steigerung der Reibkraft und Erhöhung der Lebensdauer kann das Flies auch mit einem Reibbelag beschichtet sein, der nicht isolierend wirkt.

Optional verfügt der Feststeller über eine Sensorik 25, die eine Relativbewegung der beiden zueinander beweglichen Objekte, also der Fahrzeugtür zur Fahrzeugkarosserie, erfassen soll. Die Sensorik besteht aus einem Signalgeber 27, in diesem Fall einer drehbaren Scheibe mit Positions-Codes und einem dazu ortsfesten Signalaufnehmer 29, z. B. einer Photozelle. Die Scheibe 27 ist exzentrisch achsparallel zur Mittelachse des Feststellers 1 mittels einer Welle 31 innerhalb des Zylinders 3 gelagert und wird über ein Getriebe bei einer Relativbewegung innerhalb des Feststellers angesteuert. So ist der Flansch 17 des Scharnierbolzens 5 an seiner Mantelfläche als Zahnrad 33 ausgeformt und treibt damit die ebenfalls mit einem Zahnradprofil 35 versehene Welle 31 der Scheibe 27 an. Die beiden Zahnräder 33; 35 stellen jeweils ein Ein- und ein Ausgangsteil des besagten Getriebes dar. Mit dem Getriebe 33; 35 wird die Drehbewegung innerhalb des Feststellers durch das Übersetzungsverhältnis des Getriebes gespreizt und die Messgenauigkeit der Sensorik 25 vergrößert. Ziel der Sensorik ist es, bei einer äußeren Kraft auf das bewegliche Objekt, die größer ist als eine vorbestimmte Auslösekraft, diese als eine gewollte Betätigungskraft zu erkennen und die Freischaltung des Feststellers einzuleiten.

## Patentansprüche

1. Feststeller für zwei relativ zueinander bewegliche Objekte, insbesondere Türfeststeller, umfassend einen Zylinder, der in Wirkverbindung mit einem ersten Objekt steht und einen Reibflächenträger, der in Wirkverbindung mit einem zweiten Objekt steht, wobei ein Reibelement durch Energiezufuhr einen Reibschluss zwischen dem Zylinder und dem Reibflächenträger herstellt,
**dadurch gekennzeichnet,**
**dass** das Reibelement (13) mit einer elektrischen Spannungsversorgungseinrichtung (16) verbunden ist, wobei in Abhängigkeit der angelegten Spannung eine Volumenveränderung des Reibelementes (13) auftritt, die eine Stellbewegung des Reibelementes bezogen auf die Reibfläche (15) darstellt,

2. , Feststeller nach Anspruch 1,
**dadurch gekennzeichnet,**
**dass** das Reibelement (13) von einem Kohlenstoff-Aktuator gebildet wird.

3. Feststeller nach Anspruch 2,
**dadurch gekennzeichnet,**
**dass** der Kohlenstoff-Aktuator aus Fullerenen besteht.

4. Feststeller nach Anspruch 2,
**dadurch gekennzeichnet,**
**dass** der Kohlenstoff-Aktuator in der Form von zusammengefassten Röhrchen ausgeführt ist.

5. Feststeller nach den Ansprüchen 3 oder 4,
**dadurch gekennzeichnet,**
**dass** die Röhrchen zu einem Flies zusammengefasst sind.

6. Feststeller nach Anspruch 5,
**dadurch gekennzeichnet,**
**dass** der Kohlenstoff-Aktuator mit einem Reibbelag beschichtet ist.

7. Feststeller nach einem der Ansprüche 1 bis 6,
**dadurch gekennzeichnet,**
**dass** der Kohlenstoff-Aktuator zumindest teilweise von einem Elektrolyten eingeschlossen ist.

8. Feststeller nach Anspruch 7,
**dadurch gekennzeichnet,**
**dass** als Elektrolyt eine Salzlösung verwendet wird.

9. Feststeller nach Anspruch 1,
**dadurch gekennzeichnet,**
**dass** der Feststeller (1) als Drehscharnier ausgeführt ist und der Reibflächenträger (5) von einem Scharnierbolzen gebildet wird.

10. Feststeller nach Anspruch 9,
**dadurch gekennzeichnet,**
**dass** der Scharnierbolzen (9) einen Flansch (17) aufweist, der für das Drehscharnier einen Deckel bildet.

11. Feststeller nach Anspruch 1,
**dadurch gekennzeichnet,**
**dass** der Feststeller (1) mit einer Sensorik (25) bestückt ist, die eine Relativbewegung der beiden zueinander beweglichen Objekte erfasst.

12. Feststeller nach Anspruch 11,
**dadurch gekennzeichnet,**
**dass** die Sensorik (25) ein Getriebe mit einem Ein- und mit einem Ausgangsteil (33; 35) aufweist, wobei eine der beiden Getriebeteile (33) mit dem Reibflächenträger (5) und das andere (35) mit dem Zylinder (3) in Wirkverbindung steht.

13. Feststeller nach den Ansprüchen 10 und 12,
**dadurch gekennzeichnet,**
**dass** der Flansch (17) des Scharnierbolzens (5) als ein Getriebeteil (33) ausgeführt ist.

14. Feststeller nach Anspruch 12,
**dadurch gekennzeichnet,**
**dass** der Zylinder (3) eine exzentrisch zur Mittelachse des Feststellers (1) ausgeführte Lagerstelle für das andere Getriebeteil (35) aufweist.

15. Feststeller nach Anspruch 12,
**dadurch gekennzeichnet,**
**dass** das Getriebe als ein Zahnradgetriebe (33; 35) ausgeführt ist.
